# FASCICULE DE BREVET EUROPEEN

(11) **EP 0 281 454 B1**
(45) Date de publication et mention de la délivrance du brevet: **04.05.1994**
(21) Numéro de dépôt: 88400333.6
(22) Date de dépôt: 15.02.1988
(51) Int. Cl.: G02B 6/34

(54) **Procédé de fabrication d'un coupleur multiplexeur/démultiplexeur pour fibres optiques et coupleur ainsi obtenu**
Herstellungsverfahren eines faseroptischen Multi-/Demultiplexer-Kopplers und auf diese Weise bewerkstelligter Koppler
Fabrication method for a multi/demultiplexer fibre-optic coupler and coupler obtained thereby

(30) Priorité: 16.02.1987 FR 8701952
(43) Date de publication de la demande: 07.09.1988
(73) Titulaire: ALLIANCE TECHNIQUE INDUSTRIELLE, 91031 Evry Cédex (FR)
(72) Inventeur: Malavieille, François-Louis, F-92290 Chatenay Malabry (FR); Georges, Dominique, F-77132 Boulancourt (FR)
(74) Mandataire: Plaçais, Jean-Yves

(56) Documents cités:
- EP-A- 0 037 057
- EP-A- 0 151 065
- GB-A- 2 072 876
- US-A- 4 243 297
- PATENT ABSTRACTS OF JAPAN, vol. 5, no. 96 (P-67)[768], 23 juin 1981; & JP-A-56 40 805
- PATENT ABSTRACTS OF JAPAN, vol. 6, no. 13 (P-99)[891], 26 janvier 1982; & JP-A-56 138 707
- IBM TECHNICAL DISCLOSURE BULLETIN, vol. 18, no. 10, mars 1976, page 3431, New York, US; D.S. MANSBRIDGE et al.: "Cutting tool for fiber optic cables"

## Description

L'invention concerne les dispositifs optiques utilisables dans les transmissions par fibres optiques.

Elle se rapporte plus particulièrement à un procédé de fabrication d'un coupleur multiplexeur/démultiplexeur pour fibres optiques et au coupleur ainsi obtenu.

Les transmissions par fibres optiques connaissent un développement considérable, notamment pour le "câblage" des grandes villes. Un tel câblage nécessite avant tout que l'on dispose de moyens d'interconnexion entre fibres optiques, cette interconnexion se faisant entre deux fibres mises bout à bout.

Dans sa Demande de Brevet français publiée N° 2 542 458 avec son Addition N° 2 544 876, ainsi que dans ses Demandes de Brevets français publiées Nos 2 550 630 et 2 567 656, la Demanderesse a proposé une technique permettant ladite interconnexion de base, dans des conditions satisfaisantes tant au plan économique qu'à celui des performances.

Un autre problème posé dans le câblage par fibres optiques est celui de distribuer sur plusieurs fibres, en règle générale sur deux fibres, le signal présent sur une fibre optique.

Dans le document EP-A-0 151 065, la Demanderesse a proposé un coupleur-répartiteur à fibres optiques permettant de réaliser cette fonction.

Dans la technique des transmissions par fibres optiques, on fait également appel à une transmission simultanée de signaux provenant de plusieurs sources lumineuses de différentes longueurs d'onde, et cela dans une seule fibre optique.

Cette technique nécessite de multiplexer ou démultiplexer au moins deux canaux, c'est-à-dire au moins deux longueurs d'onde ou deux groupes de longueurs d'onde.

Il est connu, à cet effet, de faire appel à des dispositifs optiques particuliers, appelés coupleurs multiplexeurs/démultiplexeurs pour réaliser une telle fonction.

On connaît, par exemple d'après US-A-4 243 297, de tels coupleurs qui comprennent une première fibre optique et une seconde fibre optique disposées en alignement axial et comprenant chacune une face frontale plane située en vis-à-vis de l'autre, l'une au moins des deux faces frontales étant non perpendiculaire à l'axe de la fibre et portant un revêtement formant miroir séparateur de rayons lumineux, de longueurs différentes; au moins une troisième fibre optique comportant une face frontale plane et dont l'axe est disposé obliquement par rapport à l'axe commun des deux premières fibres, ladite troisième fibre débouchant par sa face frontale en regard dudit miroir; et des moyens pour solidariser l'ensemble des trois fibres, lesdits moyens de solidarisation comprenant une plaque rigide et une colle fixant les fibres sur la plaque rigide.

De tels coupleurs ont été obtenus jusqu'à présent par des procédés de fabrication complexes et coûteux, difficilement compatibles avec une fabrication en grande série.

L'invention apporte une solution nouvelle, d'une grande simplicité, à ce problème de fabrication.

Selon un premier aspect, l'invention concerne un procédé de fabrication d'un coupleur multiplexeur/démultiplexeur pour fibres optiques, qui comprend les étapes suivantes :
a) la préparation d'une première fibre optique et d'une seconde fibre optique ayant chacune une face frontale plane, l'une au moins des deux faces frontales étant non perpendiculaire à l'axe de la fibre et portant un revêtement formant miroir séparateur de rayons lumineux de longueurs d'onde différentes; et la préparation d'au moins une troisième fibre optique ayant également une face frontale plane;
b) l'introduction de la première et de la seconde fibre optique ainsi préparées dans une première rainure ménagée sur une surface d'un support, et l'introduction de la troisième fibre optique préparée dans une seconde rainure également ménagée sur ladite surface dudit support et débouchant dans la première rainure;
c) le positionnement des fibres optiques dans les rainures respectives de manière que les faces frontales planes respectives de la première et de la seconde fibre optique soient en vis-à-vis et que la face frontale plane de la troisième fibre optique débouche en regard du miroir séparateur formé sur au moins ladite face frontale oblique des deux premières fibres; et
d) le maintien des trois fibres dans la position ainsi obtenue.

Selon l'invention, ce procédé est caractérisé
en ce que l'étape a) comprend, pour la préparation de la première fibre optique et/ou de la deuxième fibre optique, les opérations suivantes :
a1) enrouler sur un tambour cylindrique de diamètre choisi une fibre optique de manière à obtenir un nombre déterminé de spires jointives;
a2) maintenir les spires sur le tambour par deux bandes adhésives disposées suivant deux génératrices du tambour et couper l'ensemble des spires entre les deux bandes adhésives;
a3) séparer l'ensemble des spires et les deux bandes adhésives du tambour pour obtenir un faisceau plat de fibres maintenues par les deux bandes adhésives à au moins l'une de ses extrémités;
a4) maintenir fermement une extrémité du faisceau en appui sur une surface de polissage de manière que chacune des fibres présente une face frontale plane oblique; et
a5) appliquer aux faces frontales obliques des fibres un revêtement formant miroir séparateur de rayons lumineux;
et en ce que l'étape a) comprend, pour la préparation de la troisième fibre optique, la préparation d'une face frontale oblique; en ce que l'étape b) comprend
b1) le maintien en appui d'une plaque rigide surfacée dépourvue de rainures sur ladite surface du support pourvue desdites rainures, ledit support étant, au moins au niveau de ladite surface, en matériau mou par rapport aux fibres, et déformable élastiquement; et
b2) l'introduction de la première et de la seconde fibre optique par les deux extrémités opposées de la première rainure et l'introduction de la troisième fibre optique par l'extrémité de la seconde rainure opposée à l'autre extrémité qui débouche dans la première rainure, la première rainure et la seconde rainure étant emplies d'une substance liquide transparente formant adaptateur d'indice; et
en ce qu'à l'étape c) le positionnement des fibres optiques est effectué de manière telle que les faces frontales respectives de la première et de la seconde fibre optique sont amenées en contact au moins ponctuel l'une contre l'autre et la face frontale oblique de la troisième fibre optique est amenée, en regard du miroir, en butée contre au moins l'une des deux autres fibres.

Selon une autre caractéristique de l'invention, à l'étape b), on utilise respectivement, pour la plaque surfacée, une plaque qui est transparente, et pour la substance liquide transparente emplissant les rainures, une substance liquide qui est durcissable aux ultraviolets, et à l'étape d) le maintien des fibres s'obtient par application de rayonnements ultraviolets sur les deux rainures à travers la plaque rigide transparente, après quoi l'ensemble des trois fibres se trouve fixé à demeure sur la plaque rigide grâce à la substance durcie, et la plaque surfacée ainsi porteuse dudit ensemble de trois fibres est séparée dudit support rainuré.

Avantageusement, à l'étape d), un enrobage supplémentaire est ajouté sur les trois fibres solidaires de la plaque surfacée ainsi séparée dudit support rainuré.

Avantageusement, l'opération a4) comprend le positionnement du faisceau de fibres sur une cale de sorte que toutes les fibres aient une inclinaison choisie par rapport à la surface de polissage.

Par ailleurs, l'opération a5) comprend avantageusement l'application du revêtement formant miroir séparateur de rayons lumineux simultanément sur les faces frontales des fibres du faisceau plat dans une enceinte sous vide.

Selon un autre aspect, l'invention concerne un coupleur multiplexeur/démultiplexeur pour fibres optiques du type défini plus haut.

Ce coupleur est caractérisé en ce que ladite plaque rigide est une plaque surfacée dépourvue de rainures, en ce que la face frontale de la troisième fibre est oblique, et en ce que les trois fibres sont maintenues fixées par ladite colle sur ladite plaque surfacée de telle sorte que les faces frontales respectives de la première et de la seconde fibre optique sont en contact au moins ponctuel l'une contre l'autre et la face frontale oblique de la troisième fibre optique débouche, en regard du miroir, en butée contre au moins l'une des deux autres fibres.

Dans un mode de réalisation préféré de l'invention, la plaque rigide est transparente, étant réalisée de préférence en verre ou en silice.

L'invention s'applique non seulement à des coupleurs pour trois fibres optiques, c'est-à-dire comportant une seule "troisième fibre optique" raccordée latéralement, mais aussi à des coupleurs pour un nombre supérieur de fibres optiques, c'est-à-dire comportant plusieurs "troisièmes fibres optiques" raccordées latéralement.

D'autres caractéristiques et avantages de l'invention apparaîtront à l'examen de la description détaillée qui suit, et des dessins annexés, sur lesquels :
- la figure 1 illustre schématiquement un tambour sur lequel est enroulée une fibre optique pour obtenir des spires jointives, ces spires étant maintenues au moyen de deux bandes adhésives;
- la figure 2 illustre schématiquement un faisceau plat de fibres optiques, résultant de l'enroulement de la fibre sur le tambour de la figure 1;
- la figure 3 est une vue partielle de l'extrémité du faisceau représenté à la figure 2;
- la figure 4 illustre l'appui d'une extrémité du faisceau de fibres sur un disque de polissage;
- la figure 5 est une vue en perspective partielle de l'extrémité des fibres du faisceau, après polissage;
- la figure 6 illustre schématiquement le principe, déjà connu, de raccordement de trois fibres optiques pour former un coupleur selon l'invention;
- la figure 7 montre en perspective un dispositif à plaque de verre et bloc à rainurer en matériau mou pour la mise en oeuvre du procédé de l'invention;
- la figure 8 illustre le début de l'introduction des fibres dans le dispositif de la figure 7;
- la figure 9 illustre les fibres complètement introduites dans le dispositif précité, et soumises à un rayonnement ultraviolet;
- la figure 10 illustre le mode de réalisation préféré de l'invention, dans lequel le coupleur ne comprend que la plaque de verre et les fibres fixées sur celle-ci par collage;
- la figure 11 représente le dispositif de la figure 10 dans le cas où un enrobage supplémentaire est appliqué sur la plaque de verre;
- les figures 12 à 18 montrent des variantes de raccordement des trois fibres sur un coupleur conforme à l'invention; et
- la figure 19 illustre schématiquement un coupleur comprenant plusieurs "troisièmes fibres optiques".

La technique des fibres optiques fait à de nombreux titres intervenir des formes. A cet égard, les dessins annexés sont à considérer comme faisant partie intégrante de la présente description, pour contribuer autant que nécessaire à la définition de l'invention et à la suffisance de la description de celle-ci.

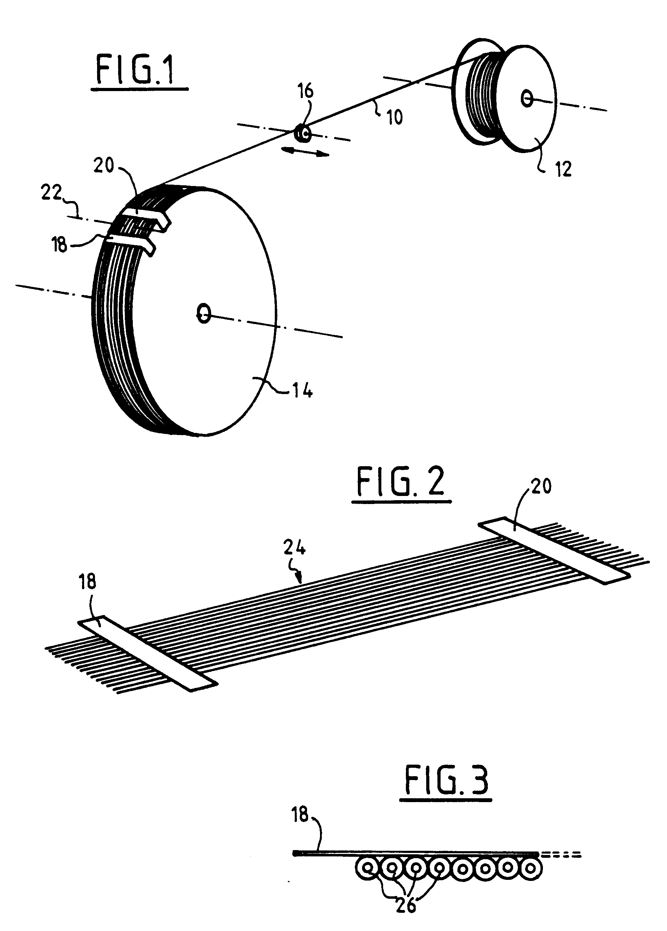

Sur la figure 1, une fibre optique 10, déroulée à partir d'une bobine 12, est enroulée sur un tambour cylindrique 14 de manière à obtenir un nombre déterminé de spires jointives. Le rayon du tambour 14 est déterminé en fonction de la longueur des tronçons de fibres dont on a besoin pour réaliser les coupleurs multiplexeurs/démultiplexeurs de l'invention.

Un dispositif 16 est prévu pour permettre l'enroulement à spires jointives sur le tambour 14. Ce dispositif 16 est du type comprenant un galet déplaçable parallèlement à l'axe du tambour 14 de manière que, pour un tour du tambour 14, la fibre qui s'enroule sur celui-ci soit décalée latéralement d'une distance correspondant exactement au diamètre de la fibre.

Après enroulement d'un nombre déterminé de spires, par exemple de 100 spires, on maintient l'ensemble des spires sur le tambour par deux bandes adhésives 18 et 20 disposées suivant deux génératrices du tambour, les extrémités respectives des bandes étant avantageusement collées sur les deux flasques du tambour. Comme illustré à la figure 1, les bandes 18 et 20 sont disposées à proximité l'une de l'autre.

On coupe ensuite l'ensemble des spires, entre les deux bandes adhésives 18 et 20, comme illustré schématiquement par le trait 22, en utilisant un outil de découpe approprié.

Après séparation de l'ensemble des spires et des deux bandes adhésives du tambour, on obtient un faisceau plat 24 de fibres optiques maintenues par les deux bandes adhésives 18 et 20, comme montré à la figure 2.

La figure 3 montre comment les fibres 26 formant le faisceau 24 sont maintenues de façon jointive par la bande adhésive 18.

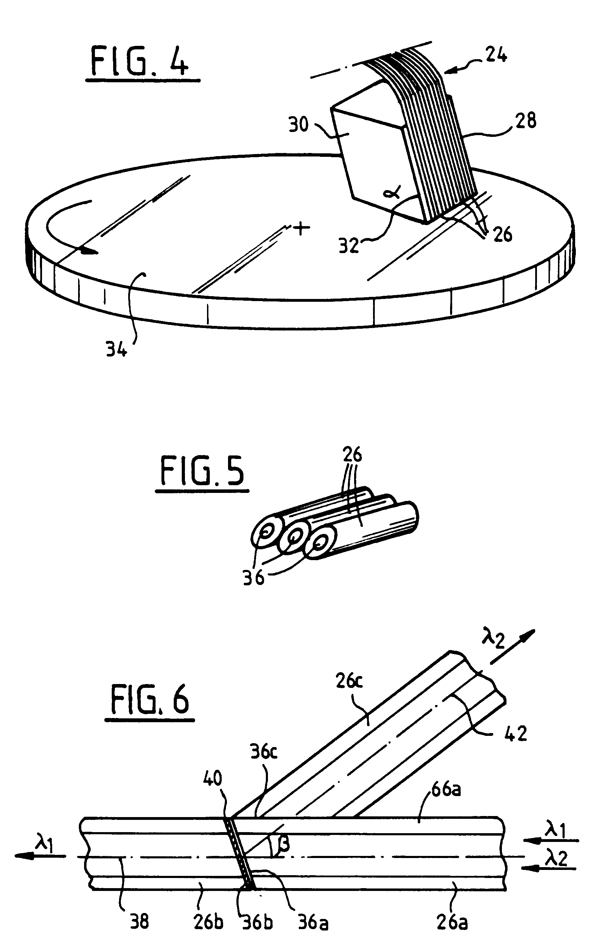

Comme montré à la figure 4, une extrémité du faisceau 24 est positionnée sur une face inclinée 28 d'une cale 30 dont une face inférieure 32 est maintenue en appui sur une surface de polissage, dans l'exemple un disque de polissage 34. Les faces 28 et 32 de la cale 30 font entre elles un angle α correspondant à la valeur souhaitée pour les faces frontales obliques des fibres 26 du faisceau 24.

Le polissage des extrémités des fibres 26 s'effectue en exerçant un effort d'appui de la cale 30 en direction du plateau 34. Avantageusement, l'opération d'usinage se fait en commençant par un disque à grains abrasifs grossiers et en terminant par un disque à grains abrasifs fins.

Lorsque l'opération de polissage est terminée, toutes les fibres 26 du faisceau 24 présentent, comme montré à la figure 5, une face frontale plane oblique 36, non perpendiculaire à l'axe correspondant de la fibre.

On obtient ainsi des tronçons de fibres présentant chacun une face frontale plane oblique dont l'angle par rapport à l'axe de la fibre est le même pour tous les tronçons.

L'autre extrémité des tronçons de fibres peut, en fonction des applications requises, soit subir le même traitement pour obtenir une deuxième face frontale oblique, soit subir un autre traitement pour obtenir une face frontale perpendiculaire à l'axe de la fibre.

Au cours de l'opération suivante, un revêtement formant miroir séparateur de rayons lumineux est appliqué simultanément sur les faces frontales 36 des fibres composant le faisceau 26, dans une enceinte sous vide.

Cette technique de dépôt sous vide est déjà connue dans la fabrication des miroirs dichroïques qui sont des lames semi-réfléchissantes sur lesquelles on effectue des dépôts de différents matériaux transparents à indices alternés. En déposant ainsi différentes couches, dites couches interférentielles, on obtient un miroir semi-réfléchissant qui permet à une longueur d'onde donnée de traverser le miroir par transmission et à une autre longueur d'onde donnée d'être réfléchie par ce miroir.

Ainsi, conformément à l'invention, le dépôt de ce revêtement s'effectue simultanément sur toutes les faces frontales 36 des fibres composant le faisceau 24.

On se réfère maintenant à la figure 6 qui montre schématiquement un coupleur multiplexeur/démultiplexeur pour fibres optiques, réalisé selon un principe déjà connu. Ce coupleur comprend une première fibre optique 26ₐ et une seconde fibre optique 26_{b} disposées en alignement axial suivant un axe 38. Les fibres 26ₐ et 26_{b} comportent respectivement des faces frontales planes obliques 36ₐ et 36_{b} obtenues comme indiqué précédemment. Ces deux faces frontales sont inclinées d'un même angle par rapport à l'axe de la fibre correspondante, et l'une au moins des faces 36ₐ et 36_{b} est munie d'un revêtement formant miroir séparateur de rayons lumineux. Dans l'exemple, c'est la face frontale 36_{b} qui est munie d'un tel revêtement 40. En variante, le revêtement pourrait être appliqué sur la face 36ₐ ou encore à la fois sur les faces 36ₐ et 36_{b}.

Une troisième fibre optique 26_{c} dont l'axe 42 forme un angle β avec l'axe 38 précité débouche en regard du miroir séparateur formé par le revêtement 40. L'inclinaison du miroir séparateur sur l'axe 38 et l'inclinaison de l'axe 42 sur l'axe 38 sont déterminées de manière qu'un rayon lumineux transmis par la fibre 26ₐ soit réfléchi par le miroir séparateur dans la direction de l'axe 42.

Dans le plan du dessin de la figure 6, le miroir forme avec une perpendiculaire à l'axe 38 un angle égal à β/2.

Le revêtement formant le miroir est déterminé en fonction des longueurs d'onde λ₁ et λ₂ qu'il convient de transmettre dans la première fibre optique 26ₐ. Dans l'exemple, ce revêtement permet à un rayon lumineux ayant une longueur d'onde λ₁, provenant de la fibre 26ₐ, d'être transmis par le miroir séparateur dans la deuxième fibre 26_{b}.

En revanche, un rayon lumineux de longueur d'onde λ₂ et provenant de la fibre 26ₐ est réfléchi par le miroir séparateur dans la direction de l'axe 42 de la troisième fibre 26_{c}.

Dans le cas qui vient d'être décrit, le coupleur fonctionne comme démultiplexeur. Ce coupleur est réversible et peut fonctionner aussi bien comme multiplexeur pour transmettre dans une même fibre optique deux rayons lumineux de longueurs d'onde respectives λ₁ et λ₂ à partir de deux fibres optiques séparées transmettant respectivement les deux rayons lumineux précités.

Bien entendu, le coupleur multiplexeur/démultiplexeur ainsi obtenu peut fonctionner soit pour deux longueurs d'onde différentes, soit pour deux groupes de longueurs d'onde différentes.

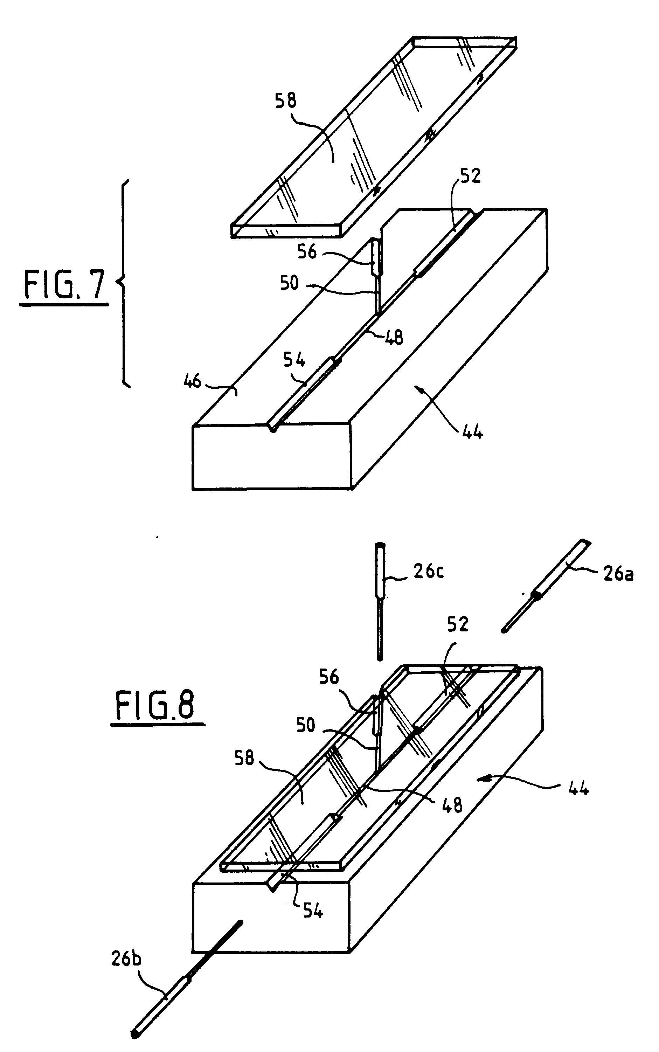

Le positionnement des extrémités des fibres 26ₐ, 26_{b} et 26_{c} dans la configuration représentée à la figure 6 s'effectue avantageusement au moyen du dispositif représenté à la figure 7. Ce dispositif comprend un support 44, de préférence de forme parallélépipédique, réalisé en un matériau mou par rapport aux fibres optiques, tel qu'un élastomère de silicones, déformable élastiquement. Le support 44 comporte une surface supérieure 46 dans laquelle sont pratiquées une première rainure 48 et une seconde rainure 50.

De préférence, la rainure 48 est définie dans la partie centrale de la surface 46 et sa forme est choisie pour correspondre aux extrémités dénudées de la première fibre 26ₐ et de la deuxième fibre 26_{b}. Cette rainure 48 est encadrée par deux rainures plus importantes 52 et 54 propres à recevoir respectivement les deux fibres 26ₐ et 26_{b}, gaines comprises. Les rainures 52 et 54 débouchent à leur tour vers l'extérieur du support 44. De façon correspondante, la deuxième rainure 50 est propre à recevoir l'extrémité dénudée de la troisième fibre 26_{c} et elle est reliée à une rainure plus importante 56 propre à recevoir la troisième fibre, gaine comprise. La rainure 50 forme avec la rainure 48 un angle β, une extrémité de la rainure 50 débouchant dans la rainure 48 et son autre extrémité débouchant dans la rainure plus importante 56. L'opération de dénudation d'une fibre optique consiste à enlever la gaine plastique de protection de la fibre et est à portée immédiate de l'homme de l'art.

Dans l'exemple, le support 44 est supposé dans son ensemble réalisé en matériau mou. Il suffit, pour la mise en oeuvre de l'invention, que le matériau mou soit présent au voisinage immédiat de la surface 40 du support.

Le dispositif comprend en outre une plaque rigide 58, en l'espèce une plaque de verre transparente, que l'on va venir mettre en appui sur la surface 46 du support 44. Un dispositif analogue est décrit, à d'autres fins, dans les Demandes de Brevets français publiées Nos 2 542 458, 2 544 876, 2 550 630, 2 567 658 et 2 558 966 au nom de la Demanderesse. Le contenu de ces Demandes antérieures est à considérer comme incorporé à la présente description, pour contribuer si nécessaire à une meilleure compréhension du dispositif de la figure 7 et des variantes que l'on peut en concevoir.

En particulier, les Demandes antérieures décrivent différentes formes de rainures. Actuellement, la Demanderesse estime que pour les applications au coupleur multiplexeur/démultiplexeur, il est souhaitable que la rainure possède, en section droite, une forme symétrique par rapport à une perpendiculaire à la plaque rigide, c'est-à-dire à la surface 46. Ont donné particulièrement satisfaction les rainures dont la section droite est en forme de V ou en forme de U.

On se réfère maintenant à la figure 8. On engage l'une après l'autre ou simultanément les extrémités des fibres 26ₐ, 26_{b} et 26_{c} respectivement par les extrémités extérieures des rainures 52, 54 et 56. Les fibres sont poussées jusqu'à ce leurs faces frontales respectives se trouvent approximativement dans la position correspondant à la configuration de la figure 6. Avantageusement, cette opération s'effectue sous la surveillance d'un microscope à travers la plaque transparente 58. Préalablement à la mise en place des trois fibres, les rainures du dispositif sont emplies d'un milieu liquide transparent, formant adaptateur d'indice.

Dans le mode de réalisation préféré de l'invention, ce milieu adaptateur d'indice est une colle durcissable aux ultraviolets, comme la colle liquide polymérisable aux rayonnements ultraviolets vendue par la Société Loctite sous la marque "Glass-Bond". Bien entendu, on peut utiliser d'autres milieux adaptateurs d'indices durcissables, en réponse à d'autres agents que les ultraviolets.

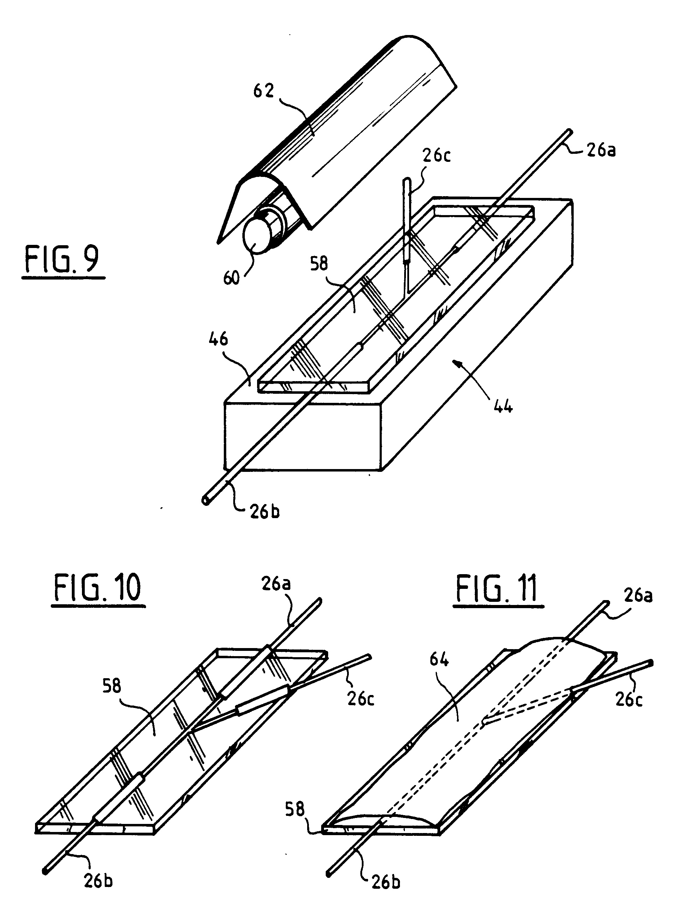

Dans le cas des ultraviolets, on prévoit, comme montré à la figure 9, un tube 60 à rayons ultraviolets, disposé au-dessus du dispositif et muni d'un réflecteur 62 dirigeant le rayonnement en direction des deux rainures du support. Le milieu durcissable est ainsi insolé par les rayons ultraviolets pendant le temps permettant sa polymérisation complète.

Après cela, on enléve la plaque de verre 58 qui emmène avec elle les fibres optiques tenues par la colle. On a observé en effet que la colle précitée n'adhère pratiquement pas sur le support 44 en élastomère de silicones.

Le coupleur multiplexeur/démultiplexeur présente alors sa forme de base définitive. Il est illustré, en position renversée, sur la figure 10, où l'on reconnaît la plaque de verre 58 et les fibres 26ₐ, 26_{b} et 26_{c} qui sont tenues à la plaque par de minces joints de colle.

On applique alors un enrobage protecteur, par exemple comme illustré sous la forme d'une résine 64 sur la figure 11.

Les extrémités libres des tronçons de fibres 26ₐ, 26_{b} et 26_{c} peuvent être placées dans des connecteurs de fibres optiques traditionnels, qui peuvent être ceux décrits dans les Demandes de Brevets et d'Addition précités de la Demanderesse.

Dans la configuration montrée à la figure 6, la face frontale 36_{c} de la troisième fibre optique 26_{c} est dirigée obliquement par rapport à l'axe 42 de manière à venir en appui sur la gaine optique 66ₐ de la fibre 26ₐ.

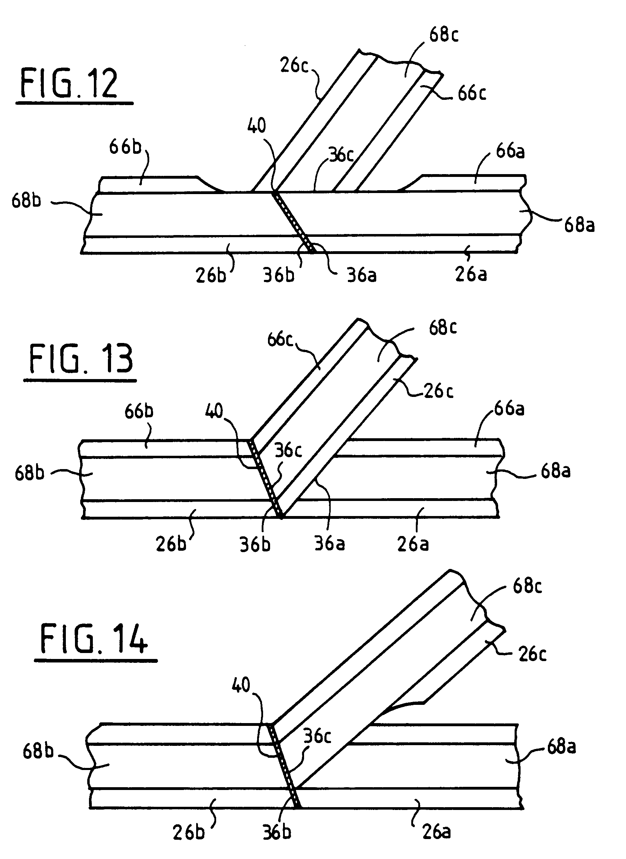

Dans la variante de réalisation de la figure 12, l'extrémité frontale 36_{c} de la fibre 26_{c} vient en contact de la première fibre 26ₐ et de la deuxième fibre 26_{b} dans une région où ces deux fibres ont été en partie usinées latéralement, par exemple par polissage, pour être débarrassées de leurs gaines optiques respectives 66ₐ et 66_{b}. De cette manière, le coeur 68_{c} de la fibre 26_{c} est en contact direct avec le coeur 68ₐ de la fibre 26ₐ. Par conséquent, les rayons lumineux réfléchis par le miroir formé par le revêtement 40 n'ont pas à traverser la gaine 66ₐ, comme c'était le cas dans la configuration de la figure 6.

Dans la variante de réalisation représentée à la figure 13, la face frontale 36_{c} de la troisième fibre 26_{c} vient en contact du miroir formé par le revêtement 40 et séparant la première fibre 26ₐ et la deuxième fibre 26_{b}, la première fibre étant aménagée pour livrer passage à l'extrémité de la troisième fibre. Dans ce but, la face frontale 36ₐ de la fibre 26ₐ fait avec l'axe de la fibre un angle égal à l'angle β de la figure 6. Dans cette variante, les rayons lumineux arrivant par la fibre 26ₐ traversent la gaine optique 66_{c} de la fibre 26_{c} avant de parvenir au miroir séparateur formé par le revêtement 40.

La variante représentée à la figure 14 s'apparente à celle de la figure 13 si ce n'est que la troisième fibre 26_{c} est en partie dépourvue de sa gaine optique 66_{c} pour obtenir un contact direct entre le coeur 68ₐ de la première fibre 26ₐ et le coeur 68_{c} de la troisième fibre 26_{c}.

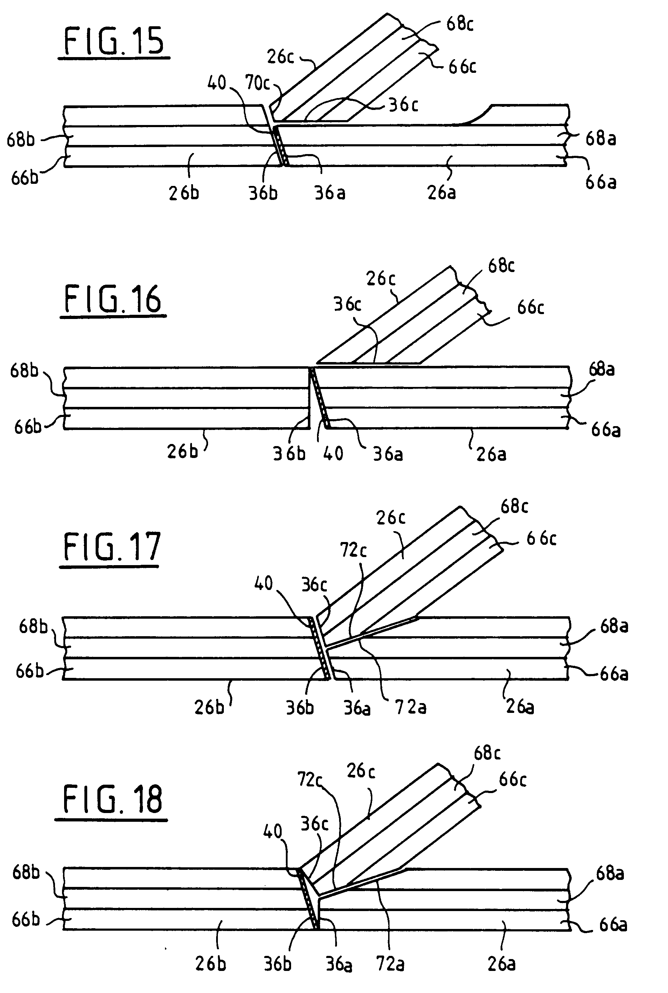

La variante représentée à la figure 15 s'apparente à celle de la figure 12, si ce n'est que seule la première fibre 26ₐ est en partie débarrassée de sa gaine optique. On évite ainsi un usinage latéral de la fibre 26_{b}. La troisième fibre 26_{c} comporte, outre sa face frontale 36_{c}, une autre face frontale 70_{c} destinée à venir en appui contre la face frontale 36_{b} de la fibre 26_{b}. Cette variante de réalisation est particulièrement avantageuse car elle permet de rapprocher les coeurs des trois fibres et améliorer ainsi le rendement optique du coupleur ainsi que le positionnement mécanique des trois fibres.

Dans les formes de réalisation des figures 6, 12 et 15, les faces frontales 36ₐ et 36_{b} sont toutes deux non perpendiculaires à l'axe de la fibre, l'angle formé entre la face frontale et l'axe de la fibre étant le même pour la fibre 26ₐ et 26_{b}. Ceci peut être obtenu simplement en s'arrangeant pour que les fibres 26ₐ et 26_{b} aient été obtenues au cours d'une même opération d'usinage, comme décrit précédemment en référence à la figure 4.

Dans ces formes de réalisation, le revêtement 40 formant miroir sélectif peut être appliqué soit sur la face frontale 36ₐ, soit sur la face frontale 36_{b}, soit à la fois sur les deux faces frontales 36ₐ et 36_{b}. Dans les différentes formes de réalisation précitées, on peut prévoir, en variante, que seule la face frontale 36ₐ soit non perpendiculaire à l'axe de la fibre 26ₐ, la face frontale 36_{b} étant alors perpendiculaire à l'axe de la fibre 26_{b}. En pareil cas, le revêtement formant miroir sélectif peut être appliqué soit sur la face frontale 36ₐ, soit à la fois sur la face frontale 36ₐ et la face frontale 36_{b}.

Dans les formes de réalisation des figures 13 et 14, il est possible, en variante, d'appliquer le revêtement 40 formant miroir sélectif sur la face frontale 36_{c} de la fibre latérale 26_{c}.

La figure 16 montre, à titre d'exemple, une variante de réalisation du coupleur de la figure 6, dans lequel la face frontale 36ₐ est non perpendiculaire à l'axe de la fibre 26ₐ, tandis que la face frontale 36_{b} est perpendiculaire à l'axe de la fibre 26_{b}. Dans cet exemple particulier, le revêtement 40 est appliqué seulement sur la face frontale 36ₐ.

L'obtention d'une face plane 36_{b} perpendiculaire à l'axe de la fibre 26_{b} peut être obtenue par application des enseignements de la Demande de Brevet français publiée sous le N° 2 422 604 au nom de la Demanderesse.

Dans la forme de réalisation de la figure 17, la première fibre 26ₐ et la troisième fibre 26_{c} sont usinées latéralement pour permettre leur raccordement suivant un plan bisecteur de leurs axes respectifs, par contact entre deux faces latérales 72ₐ et 72_{c}. Les faces frontales 36ₐ et 36_{c} sont alors usinées de manière à venir en contact avec la face frontale 36_{b} de la fibre 26_{b}. Dans cette forme de réalisation, le revêtement 40 formant miroir sélectif est appliqué sur la face frontale 36_{b}.

La forme de réalisation de la figure 18 est une variante de celle de la figure 17. Dans ce cas, les faces frontales 36ₐ et 36_{c} sont perpendiculaires à l'axe de la fibre correspondante. Ceci évite d'avoir à faire un usinage supplémentaire en bout des fibres. Là encore, le revêtement 40 est appliqué sur la face frontale 36_{b}.

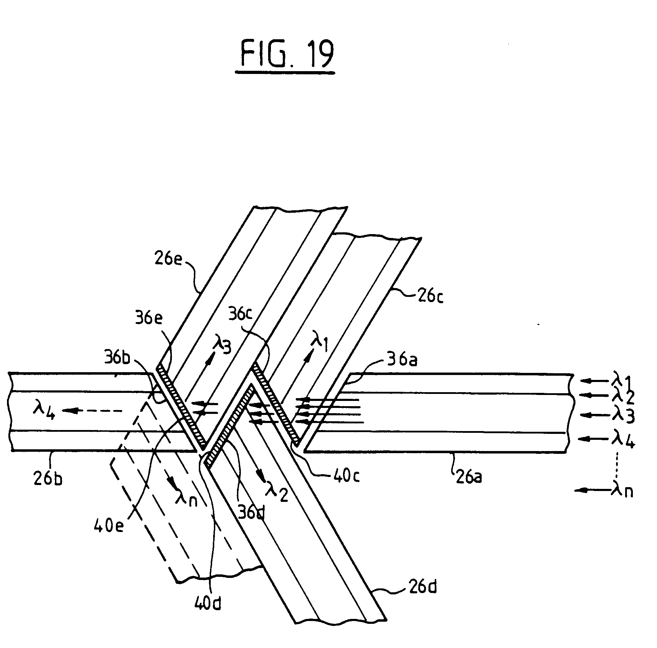

Dans la forme de réalisation de la figure 19, on réalise un coupleur pour les deux fibres optiques 26ₐ et 26_{b} alignées axialement et pour plusieurs "troisièmes fibres optiques" ou fibres optiques latérales 26_{c}, 26_{d} et 26ₑ qui, dans l'ensemble, sont au nombre de trois. Les fibres optiques 26_{c} et 26ₑ sont parallèles entre elles et situées d'un même côté de l'axe des fibres optiques 26ₐ et 26_{b}, en formant un angle de 60° avec cet axe. La fibre optique 26_{d} fait également un angle de 60° avec l'axe précité, mais est situé du côté opposé aux fibres 26_{c} et 26ₑ tout en étant dans le même plan que ces dernières. Les faces frontales respectives 36_{c}, 36_{d} et 36ₑ des fibres latérales 26_{c}, 26_{d} et 26ₑ sont à 60° par rapport aux axes correspondants des fibres et sont munies chacune d'un revêtement 40_{c}, 40_{d} et 40ₑ formant miroir sélectif. Les faces frontales obliques 36ₐ et 36_{b} des fibres 26ₐ et 26_{b} ne comportent aucun revêtement. On obtient ainsi une structure compacte en dents de scie. Si l'on transmet quatre longueurs d'onde λ₁, λ₂, λ₃ et λ₄ dans la fibre 26ₐ, on récupère dans les fibres 26_{c}, 26_{d}, 26ₑ et 26_{b} respectivement quatre rayons lumineux de longueurs d'onde respectives λ₁, λ₂, λ₃ et λ₄. On pourrait bien entendu ajouter d'autres fibres latérales, comme montré en trait fantôme sur la figure 19, et transmettre ainsi n longueurs d'onde λ₁.....λₙ.

Bien entendu, les différentes variantes de réalisation précitées sont données seulement à titre d'exemple et leurs caractéristiques peuvent se combiner.

D'autre part, il est à noter que le coupleur de l'invention peut s'appliquer aussi bien à des fibres ayant le même diamètre de coeur qu'à des fibres ayant des diamètres de coeur différents.

## Revendications

1. Procédé de fabrication d'un coupleur multiplexeur/démultiplexeur pour fibres optiques, comprenant les étapes suivantes :
a) la préparation d'une première fibre optique (26ₐ) et d'une seconde fibre optique (26_{b}) ayant chacune une face frontale plane (36ₐ, 36_{b}), l'une au moins des deux faces frontales étant non perpendiculaire à l'axe de la fibre et portant un revêtement (40) formant miroir séparateur de rayons lumineux de longueurs d'onde différentes; et la préparation d'au moins une troisième fibre optique (26_{c}) ayant également une face frontale plane (36_{c});
b) l'introduction de la première et de la seconde fibre optique (26ₐ, 26_{b}) ainsi préparées dans une première rainure (48) ménagée sur une surface (46) d'un support (44), et l'introduction de la troisième fibre optique préparée (26_{c}) dans une seconde rainure (50) également ménagée sur ladite surface (46) dudit support (44) et débouchant dans la première rainure (48);
c) le positionnement des fibres optiques (26ₐ, 26_{b}, 26_{c}) dans les rainures respectives de manière que les faces frontales planes respectives (36ₐ, 36_{b}) de la première et de la seconde fibre optique soient en vis-à-vis et que la face frontale plane (36_{c}) de la troisième fibre optique (26_{c}) débouche en regard du miroir séparateur formé sur au moins ladite face frontale oblique des deux premières fibres; et
d) le maintien des trois fibres dans la position ainsi obtenue,
ledit procédé étant caractérisé
en ce que l'étape a) comprend, pour la préparation de la première fibre optique (26ₐ) et/ou de la deuxième fibre optique (26_{b}), les opérations suivantes :
a1) enrouler sur un tambour cylindrique (14) de diamètre choisi une fibre optique (10) de manière à obtenir un nombre déterminé de spires jointives;
a2) maintenir les spires sur le tambour (14) par deux bandes adhésives (18, 20) disposées suivant deux génératrices du tambour et couper l'ensemble des spires entre les deux bandes adhésives;
a3) séparer l'ensemble des spires et les deux bandes adhésives (18, 20) du tambour (14) pour obtenir un faisceau plat (24) de fibres (26) maintenues par les deux bandes adhésives à au moins l'une de ses extrémités;
a4) maintenir fermement une extrémité du faisceau (24) en appui sur les surfaces de polissage (34) de manière que chacune des fibres (26) présente une face frontale plane oblique (36); et
a5) appliquer aux faces frontales obliques (36) des fibres (26) un revêtement (40) formant miroir séparateur de rayons lumineux;
et en ce que l'étape a) comprend, pour la préparation de la troisième fibre optique (26_{c}), la préparation d'une face frontale oblique;
en ce que l'étape b) comprend :
b1) le maintien en appui d'une plaque rigide surfacée (58) dépourvue de rainures sur ladite surface (46) du support (44) pourvue desdites rainures (48, 50), ledit support étant, au moins au niveau de ladite surface, en matériau mou par rapport aux fibres, et déformable élastiquement; et
b2) l'introduction de la première et de la seconde fibre optique (26ₐ, 26_{b}) par les deux extrémités opposées de la première rainure (48) et l'introduction de la troisième fibre optique (26_{c}) par l'extrémité de la seconde rainure (50) opposée à l'autre extrémité qui débouche dans la première rainure (48), la première rainure (48) et la seconde rainure (50) étant emplies d'une substance liquide transparente formant adaptateur d'indice; et
en ce qu'à l'étape c) le positionnement des fibres optiques est effectué de manière telle que les faces frontales respectives (36ₐ, 36_{b}) de la première et de la seconde fibre optique (26ₐ, 26_{b}) sont amenées en contact au moins ponctuel l'une contre l'autre et la face frontale oblique (36_{c}) de la troisième fibre optique (26_{c}) est amenée, en regard du miroir (40), en butée contre au moins l'une des deux autres fibres.

2. Procédé selon la revendication 1, caractérisé en ce qu'à l'étape b) on utilise respectivement, pour la plaque surfacée (58), une plaque qui est transparente et, pour la substance liquide transparente emplissant les rainures, une substance liquide qui est durcissable aux ultraviolets, et
en ce qu'à l'étape d) le maintien des fibres (26ₐ, 26_{b}, 26_{c}) s'obtient par application de rayonnements ultraviolets sur les deux rainures (48, 50) à travers la plaque rigide transparente (58), après quoi l'ensemble des trois fibres se trouve fixé à demeure sur la plaque rigide grâce à la substance durcie, et la plaque surfacée ainsi porteuse dudit ensemble de trois fibres est séparée dudit support rainuré (44).

3. Procédé selon la revendication 2, caractérisé en ce qu'à l'étape d) un enrobage supplémentaire (64) est ajouté sur les trois fibres (26ₐ, 26_{b}, 26_{c}) solidaires de la plaque surfacée (58) ainsi séparée dudit support rainuré.

4. Procédé selon l'une des revendications 1 à 3, caractérisé en ce que la première rainure (48) est propre à recevoir les extrémités dénudées des deux premières fibres (26ₐ, 26_{b}) et est encadrée par deux rainures latérales (52, 54) plus importantes propres à recevoir les deux fibres (26ₐ, 26_{b}), gaines comprises, et en ce que la deuxième rainure (50) est propre à recevoir l'extrémité dénudée de la troisième fibre (26_{c}) et est reliée à une rainure plus importante (56) propre à recevoir la troisième fibre (26_{c}), gaine comprise.

5. Procédé selon l'une des revendications 1 à 4, caractérisé en ce que l'opération a4) comprend le positionnement du faisceau de fibres (24) sur une cale (30) de sorte que toutes les fibres aient une inclinaison choisie par rapport à la surface de polissage (34).

6. Procédé selon l'une des revendications 1 à 5, caractérisé en ce que l'opération a5) comprend l'application du revêtement (40) formant miroir séparateur de rayons lumineux simultanément sur les faces frontales (36) des fibres (26) du faisceau plat (24), dans une enceinte sous vide.

7. Coupleur multiplexeur/démultiplexeur pour fibres optiques, du type comprenant une première fibre optique (26ₐ) et une seconde fibre optique (26_{b}) disposées en alignement axial (38) et comprenant chacune une face frontale plane (36ₐ, 36_{b}) située en vis-à-vis de l'autre, l'une au moins des deux faces frontales étant non perpendiculaire à l'axe de la fibre et portant un revêtement (40) formant miroir séparateur de rayons lumineux de longueurs d'onde différentes; au moins une troisième fibre optique (26_{c}) comportant une face frontale plane (36_{c}) et dont l'axe (42) est disposé obliquement par rapport à l'axe commun (38) des deux premières fibres, ladite troisième fibre débouchant par sa face frontale en regard dudit miroir; et des moyens pour solidariser l'ensemble des trois fibres, lesdits moyens de solidarisation comprenant une plaque rigide (58) et une colle fixant les fibres sur la plaque rigide, caractérisé en ce que ladite plaque rigide (58) est une plaque surfacée dépourvue de rainures, en ce que la face frontale (36_{c}) de la troisième fibre (26_{c}) est oblique, et en ce que les trois fibres sont maintenues fixées par ladite colle sur ladite plaque surfacée de telle sorte que les faces frontales respectives (36ₐ, 36_{b}) de la première et de la seconde fibre optique (26ₐ, 26_{b}) sont en contact au moins ponctuel l'une contre l'autre et la face frontale oblique (36_{c}) de la troisième fibre optique (26_{c}) débouche, en regard du miroir (40), en butée contre au moins l'une des deux autres fibres.

8. Coupleur selon la revendication 7, caractérisé en ce que la plaque rigide surfacée (58) est transparente et est réalisée, de préférence, en verre ou en silice.

9. Coupleur selon l'une des revendications 7 et 8, caractérisé en ce que l'extrémité frontale (36_{c}) de la troisième fibre optique (26_{c}) vient au contact de la gaine optique (66ₐ) de la première fibre (26ₐ).

10. Coupleur selon l'une des revendications 7 et 8, caractérisé en ce que l'extrémité frontale (36_{c}) de la troisième fibre (26_{c}) vient en contact de la première fibre (26ₐ) et de la deuxième fibre (26_{b}) dans une région où l'une au moins des deux fibres (26ₐ, 26_{b}) est débarrassée de sa gaine optique (66ₐ, 66_{b}).

11. Coupleur selon la revendication 10, caractérisé en ce que seule la première fibre (26ₐ) est en partie débarrassée de sa gaine optique (66ₐ).

12. Coupleur selon l'une des revendications 7 et 8, caractérisé en ce que la face frontale (36_{c}) de la troisième fibre (26_{c}) vient en contact du miroir séparant la première fibre optique (26ₐ) et la seconde fibre optique (26_{b}), la première fibre optique (26ₐ) étant aménagée pour livrer passage à l'extrémité de la troisième fibre optique (26_{c}).

13. Coupleur selon la revendication 12, caractérisé en ce que la troisième fibre (26_{c}) est en partie débarrassée de sa gaine optique (66_{c}) pour obtenir un contact direct entre le coeur (68ₐ) de la première fibre optique (26ₐ) et le coeur (68_{c}) de la troisième fibre optique (26_{c}).

14. Coupleur selon l'une des revendications 7 et 8, caractérisé en ce que la première fibre (26ₐ) et la troisième fibre (26_{c}) sont usinées latéralement (72ₐ, 72_{c}) pour permettre leur raccordement suivant un plan bissecteur de leurs axes respectifs.

## Claims

1. Method of manufacturing a multiplexer/demultiplexer coupler for optical fibres, comprising the following steps:
a) the preparation of a first optical fibre (26ₐ) and a second optical fibre (26_{b}), each having a planar front face (36ₐ, 36_{b}), at least one of the two front faces being not perpendicular to the axis of the fibre and carrying a coating (40) forming a mirror separating light beams of different wavelengths; and preparation of at least a third optical fibre (26_{c}) also having a planar front face (36_{c});
b) inserting the first and second optical fibres (26ₐ, 26_{b}) thus prepared into a first groove (48) made on a surface (46) of a support (44), and inserting the third optical fibre prepared (26_{c}) into a second groove (50) also made on the said surface (46) of the said support (44) and opening out in the first groove (48);
c) positioning the optical fibres (26ₐ, 26_{b}, 26_{c}) in the respective grooves such that the respective planar faces (36ₐ, 36_{b}) of the first and of the second optical fibres are facing and the planar front face (36_{c}) of the third optical fibre (26_{c}) opens out facing the separator mirror formed on at least the said oblique front face of the first two fibres; and
d) holding the three fibres in the position thus obtained,
the said method being characterized in that step a) comprises, for preparing the first optical fibre (26ₐ) and/or the second optical fibre (26_{b}), the following operations:
a1) winding an optical fibre (10) on a cylindrical drum (14) of chosen diameter so as to obtain a determined number of contiguous turns;
a2) holding the turns on the drum (14) by two adhesive strips (18, 20) arranged along two generatrices of the drum, and cutting all the turns between the two adhesive strips;
a3) separating all the turns and the two adhesive strips (18, 20) from the drum (14) to obtain a flat bundle (24) of fibres (26) held by the two adhesive strips at at least one of its ends;
a4) firmly holding one end of the bundle (24) against the polishing surfaces (34) so that each of the fibres (26) has an oblique planar front face (36); and
a5) applying a coating (40) forming a light-ray separator mirror to the oblique front faces (36) of the fibres (26);
and in that step a) comprises, for preparing the third optical fibre (26_{c}), the preparation of an oblique front face;
and in that step b) comprises:
b1) holding a surfaced rigid plate (58), free of grooves, against the said surface (46) of the support (44) provided with the said grooves (48, 50), the said support being, at least at the said surface, made of a material which is soft compared to the fibres, and elastically deformable; and
b2) inserting the first and the second optical fibre (26ₐ, 26_{b}) through the two opposite ends of the first groove (48) and inserting the third optical fibre (26_{c}) through the end of the second groove (50) which is opposite the other end which opens out into the first groove (48), the first groove (48) and the second groove (50) being filled with a transparent liquid substance forming an index matcher; and
in that in step c), the positioning of the optical fibres is carried out such that the respective front faces (36ₐ, 36_{b}) of the first and second optical fibre (26ₐ, 26_{b}) are brought into at least point contact against each other, and the oblique front face (36_{c}) of the third optical fibre (26_{c}) is brought, facing the mirror (40), to abut against at least one of the other two fibres.

2. Method according to Claim 1, characterized in that, in step b), a plate which is transparent is used for the surfaced plate (58) and a liquid substance which can be hardened using ultraviolet light are used respectively for the transparent liquid substance filling the grooves, and
in that, in step d) the fibres (26ₐ, 26_{b}, 26_{c}) are held by applying ultraviolet radiation onto the two grooves (48, 50) through the transparent rigid plate (58), after which all three fibres are permanently fixed on the rigid plate by the hardened substance, and the surfaced plate thus carrying all three fibres is separated from the said grooved support (44).

3. Method according to Claim 2, characterized in that, in step d), an additional jacket (64) is added onto the three fibres (26ₐ, 26_{b}, 26_{c}) which are solidly attached to the surfaced plate (58) thus separated from the said grooved support.

4. Method according to one of Claims 1 to 3, characterized in that the first groove (48) is capable of receiving the stripped ends of the first two fibres (26ₐ, 26_{b}) and is framed by two larger side grooves (52, 54) which can receive the two fibres (26ₐ, 26_{b}), including their cladding, and in that the second groove (50) is capable of receiving the stripped end of the third fibre (26_{c}) and is connected to a larger groove (56) capable of receiving the third fibre (26_{c}), including its cladding.

5. Method according to one of Claims 1 to 4, characterized in that the operation a4) comprises positioning of the bundle of fibres (24) on a wedge (30) so that all the fibres have a chosen inclination with respect to the polishing surface (34).

6. Method according to one of Claims 1 to 5, characterized in that operation a5) comprises application of the coating (40) forming the mirror separating the light rays simultaneously on the front faces (36) of the fibres (26) of the flat bundle (24), in an evacuated chamber.

7. Multiplexer/demultiplexer decoupler for optical fibres, of the type comprising a first optical fibre (26ₐ) and a second optical fibre (26_{b}) which are arranged in axial alignment (38) and each comprise a planar front face (36ₐ, 36_{b}) situated opposite each other, at least one of the two front faces not being perpendicular to the axis of the fibre and carrying a coating (40) forming a mirror separating light rays of different wavelengths; at least a third optical fibre (26_{c}) including a planar front face (36_{c}), the axis (42) of which fibre is arranged obliquely with respect to the common axis (38) of the first two fibres, the said third fibre opening out via its front face opposite the said mirror; and means for solidly attaching all three fibres, the said attachment means comprising a rigid plate (58) and an adhesive fixing the fibres onto the rigid plate, characterized in that the said rigid plate (58) is a surfaced plate, free of grooves, and in that the front face (36_{c}) of the third fibre (26_{c}) is oblique, and in that the three fibres are held fixed by the said adhesive on the said surfaced plate such that the respective front faces (36ₐ, 36_{b}) of the first and of the second optical fibres (26ₐ, 26_{b}) are in at least point contact with each other and the oblique front face (36_{c}) of the third optical fibre (26_{c}) opens out, facing the mirror (40), in abutment against at least one of the other two fibres.

8. Coupler according to Claim 7, characterized in that the surfaced rigid plate (58) is transparent and is preferably made of glass or of silica.

9. Coupler according to one of Claims 7 or 8, characterized in that the front end (36_{c}) of the third optical fibre (26_{c}) comes into contact with the optical cladding (66ₐ) of the first fibre (26ₐ).

10. Coupler according to one of Claims 7 and 8, characterized in that the front end (36_{c}) of the third fibre (26_{c}) comes into contact with the first fibre (26ₐ) and the second fibre (26_{b}) in a region where at least one of the two fibres (26ₐ, 26_{b}) is stripped of its optical cladding (66ₐ, 66_{b}).

11. Coupler according to Claim 10, characterized in that only the first fibre (26ₐ) is partly stripped of its optical cladding (66ₐ).

12. Coupler according to one of Claims 7 or 8, characterized in that the front face (36_{c}) of the third fibre (26_{c}) comes into contact with the mirror separating the first optical fibre (26ₐ) and the second optical fibre (26_{b}), for the first optical fibre (26ₐ) being arranged to allow passage for the end of the third optical fibre (26_{c}).

13. Coupler according to Claim 12, characterized in that the third fibre (26_{c}) is partly stripped of its optical cladding (66_{c}) to obtain direct contact between the core (68ₐ) of the first optical fibre (26ₐ) and the core (68_{c}) of the third optical fibre (26_{c}).

14. Coupler according to one of Claims 7 or 8, characterized in that the first fibre (26ₐ) and the third fibre (26_{c}) are machined laterally (72ₐ, 72_{c}) to allow them to be joined along a plane bisecting their respective axes.

## Patentansprüche

1. Verfahren zur Herstellung eines Multiplex/Demultiplex-Kopplers für Lichtleitfasern, bestehend aus den folgenden Schritten:
a) Herstellung einer ersten Lichtleitfaser (26ₐ) und einer zweiten Lichtleitfaser (26_{b}), die jeweils eine ebene Stirnfläche (36ₐ, 36_{b}) besitzen, von denen wenigstens eine zur Achse der Faser nicht senkrecht ist und eine Beschichtung (40) trägt, die einen Spiegel zur Trennung von Lichtstrahlen mit verschiedenen Wellenlängen bildet, und Herstellung Wenigstens einer dritten Lichtleitfaser (26_{c}), die ebenfalls eine ebene Stirnfläche (36_{c}) besitzt;
b) Einführung dieser ersten und dieser zweiten Lichtleitfaser (26ₐ, 26_{b}) in eine erste auf einer Oberfläche (46) eines Trägers (44) vorgesehene Nut (48) und Einführung der dritten Lichtleitfaser (26_{c}) in eine zweite Nut (50), die ebenfalls auf dieser Oberfläche (46) des Trägers (44) vorgesehen ist und in die erste Nut (48) mündet;
c) Positionierung der Lichtleitfasern (26ₐ, 26_{b}, 26_{c}) in den jeweiligen Nuten, so daß die ebenen Stirnflächen (36ₐ, 36_{b}) der ersten und der zweiten Lichtleitfaser einander gegenüberstehen und die ebene Stirnfläche (36_{c}) der dritten Lichtleitfaser (26_{c}) gegenüber dem wenigstens auf der schrägen Stirnfläche der beiden ersten Fasern gebildeten Trennspiegel mündet; und
d) Halt der drei Lichtleitfasern in dieser Stellung,
dadurch gekennzeichnet,
daß der Schritt a) zur Herstellung der ersten Lichtleitfaser (26ₐ) und/oder der zweiten Lichtleitfaser (26_{b}) die folgenden Arbeitsgänge umfaßt:
a1) Aufrollen einer Lichtleitfaser (10) auf einer zylindrischen Trommel (14) mit einem bestimmten Durchmesser, so daß man eine bestimmte Anzahl von aneinander anliegenden Windungen erhält;
a2) Festhalten der Windungen auf der Trommel (14) durch zwei längs zweier Erzeugender der Trommel angeordnete Klebebänder (18, 20) und Durchschneiden aller Windungen zwischen den beiden Klebebändern;
a3) Trennung aller Windungen und der beiden Klebebänder (18, 20) von der Trommel (14), um ein flaches Bündel (24) von Fasern (26) zu erhalten, die durch die beiden Klebebänder an wenigstens einem ihrer Enden gehalten werden;
a4) Halten eines Endes des Bündels (24) in fester Anlage an den Polierflächen (34), so daß jede der Lichtleitfasern (26) eine schräge ebene Stirnfläche (36) erhält; und
a5) Aufbringen einer einen Spiegel zur Trennung von Lichtstrahlen bildenden Beschichtung (40) auf die schrägen Stirnflächen (36) der Fasern (26);
daß der Schritt a) zur Herstellung der dritten Lichtleitfaser (26_{c}) die Herstellung einer schrägen Stirnfläche umfaßt;
daß der Schritt b) folgende Arbeitsgänge umfaßt:
b1) Aufgelegthalten einer oberflächenbearbeiteten starren Platte (58) ohne Nuten auf der mit den Nuten (48, 50) versehenen Oberfläche (46) des Trägers (44), der wenigstens in Höhe dieser Oberfläche aus einem bezüglich den Fasern weichen und elastisch verformbaren Werkstoff besteht; und
b2) Einführung der ersten und der zweiten Lichtleitfaser (26ₐ, 26_{b}) über die beiden einander entgegengesetzten Enden der ersten Nut (48) und Einführung der dritten Lichtleitfaser (26_{c}) über das Ende der zweiten Nut (50), das dem in die erste Nut (48) mündenden Ende entgegengesetzt ist, wobei die erste Nut (48) und die zweite Nut (50) mit einer einen Indexadapter bildenden transparenten flüssigen Substanz gefüllt sind; und
daß die Positionierung der Lichtleitfasern im Schritt c) so durchgeführt wird, daß die jeweiligen Stirnflächen (36ₐ, 36_{b}) der ersten und der zweiten Lichtleitfaser (26ₐ, 26_{b}) wenigstens punktuell miteinander in Kontakt gebracht sind und die schräge Stirnfläche (36_{c}) der dritten Lichtleitfaser (26_{c}) gegenüber dem Spiegel (40) an wenigstens einer der beiden anderen Fasern in Anschlag gebracht ist.

2. Verfahren nach Anspruch 1, dadurch gekennzeichnet, daß man im Schritt b) für die oberflächenbearbeitete Platte (58) eine transparente Platte und für die die Nuten füllende transparente flüssige Substanz eine flüssige Substanz verwendet, die bei UV-Licht härtbar ist, und
daß der Halt der Fasern (26ₐ, 26_{b}, 26_{c}) im Schritt d) durch Aufbringen von UV-Strahlen auf die beiden Nuten (48, 50) durch die starre transparente Platte (58) hindurch hergestellt wird, worauf die drei Fasern durch die gehärtete Substanz bleibend an der starren Platte befestigt sind, und die nunmehr die drei Fasern tragende oberflächenbearbeitete Platte vom mit Nuten versehenen Träger (44) getrennt wird.

3. Verfahren nach Anspruch 2, dadurch gekennzeichnet, daß im Schritt d) auf die drei Fasern (26ₐ, 26_{b}, 26_{c}), die mit der auf diese Weise vom mit Nuten versehenen Träger getrennten, oberflächenbearbeiteten Platte (58) fest verbunden sind, eine zusätzliche Beschichtung (64) aufgebracht wird.

4. Verfahren nach einem der Ansprüche 1 bis 3, dadurch gekennzeichnet, daß die erste Nut (48) die abgemantelten Enden der beiden ersten Fasern (26ₐ, 26_{b}) aufnehmen kann und sich zwischen zwei größeren seitlichen Nuten (52, 54) befindet, die die beiden Fasern (26ₐ, 26_{b}) einschließlich ihrer Mäntel aufnehmen können, und daß die zweite Nut (50) das abgemantelte Ende der dritten Faser (26_{c}) aufnehmen kann und mit einer größeren Nut (56) verbunden ist, die die dritte Faser (26_{c}) einschließlich ihres Mantels aufnehmen kann.

5. Verfahren nach einem der Ansprüche 1 bis 4, dadurch gekennzeichnet, daß der Arbeitsgang a4) die Positionierung des Faserbündels (24) auf einem Unterlegkeil (30) umfaßt, so daß alle Fasern eine bestimmte Neigung gegen die Polierfläche (34) haben.

6. Verfahren nach einem der Ansprüche 1 bis 5, dadurch gekennzeichnet, daß der Arbeitsgang a5) das Aufbringen der den Spiegel zur Lichtstrahlentrennung bildenden Beschichtung (40) gleichzeitig auf die Stirnflächen (36) der Fasern (26) des flachen Bündels (24) in einer Vakuumkammer umfaßt.

7. Multiplex/Demultiplex-Koppler für Lichtleitfasern, bestehend aus einer ersten Lichtleitfaser (26ₐ) und einer zweiten Lichtleitfaser (26_{b}), die in einer gemeinsamen Achse (38) angeordnet sind und jeweils eine ebene Stirnfläche (36ₐ, 36_{b}) besitzen, die gegenüber der anderen angeordnet ist, wobei wenigstens eine der beiden Stirnflächen zur Achse der Faser nicht senkrecht ist und eine Beschichtung (40) trägt, die einen Spiegel zur Trennung von Lichtstrahlen mit verschiedenen Wellenlängen bildet, wenigstens einer dritten Lichtleitfaser (26_{c}), die eine ebene Stirnfläche (36_{c}) besitzt und deren Achse (42) zur gemeinsamen Achse (38) der beiden ersten Fasern schräg angeordnet ist und die mit ihrer Stirnfläche gegenüber dem Spiegel ausmündet, und Mitteln zur festen Verbindung der drei Fasern, die eine starre Platte (58) und einen Kleber zur Befestigung der Fasern auf der starren Platte umfassen, dadurch gekennzeichnet, daß die starre Platte (58) eine oberflächenbearbeitete Platte ohne Nuten ist, daß die Stirnfläche (36_{c}) der dritten Faser (26_{c}) schräg ist und daß die drei Fasern durch den Kleber auf der oberflächenbearbeiteten Platte befestigt gehalten sind, so daß die jeweiligen Stirnflächen (36ₐ, 36_{b}) der ersten und der zweiten Lichtleitfaser (26ₐ, 26_{b}) mindestens punktuell miteinander in Kontakt sind und die schräge Stirnfläche der dritten Lichtleitfaser (26_{c}) gegenüber dem Spiegel (40) und in Anschlag an wenigstens einer der beiden anderen Fasern ausmündet.

8. Koppler nach Anspruch 7, dadurch gekennzeichnet, daß die starre oberflächenbearbeitete Platte (58) transparent ist und vorzugsweise aus Glas oder Siliziumoxid besteht.

9. Koppler nach einem der Ansprüche 7 und 8, dadurch gekennzeichnet, daß das Stirnende (36_{c}) der dritten Lichtleitfaser (26_{c}) mit dem optischen Mantel (66ₐ) der erten Faser (26ₐ) in Kontakt kommt.

10. Koppler nach einem der Ansprüche 7 und 8, dadurch gekennzeichnet, daß das Stirnende (36_{c}) der dritten Faser (26_{c}) mit der ersten Faser (26ₐ) und der zweiten Faser (26_{b}) in einem Bereich in Kontakt kommt, in dem wenigstens eine der beiden Fasern (26ₐ, 26_{b}) von ihrem optischen Mantel (66ₐ, 66_{b}) befreit ist.

11. Koppler nach Anspruch 10, dadurch gekennzeichnet, daß nur die erste Faser (26ₐ) zum Teil von ihrem optischen Mantel (66ₐ) befreit ist.

12. Koppler nach einem der Ansprüche 7 und 8, dadurch gekennzeichnet, daß die Stirnfläche (36_{c}) der dritten Faser (26_{c}) mit dem die erste Lichtleitfaser (26ₐ) von der zweiten Lichtleitfaser (26_{b}) trennenden Spiegel in Kontakt kommt, wobei die erste Lichtleitfaser (26ₐ) so ausgebildet ist, daß sie einen Durchgang für das Ende der dritten Lichtleitfaser (26_{c}) bietet.

13. Koppler nach Anspruch 12, dadurch gekennzeichnet, daß die dritte Lichtleitfaser (26_{c}) zum Teil von ihrem optischen Mantel (66_{c}) befreit ist, um einen direkten Kontakt zwischen dem Kern (68ₐ) der ersten Lichtleitfaser (26ₐ) und dem Kern (68_{c}) der dritten Lichtleitfaser (26_{c}) zu erhalten.

14. Koppler nach einem der Ansprüche 7 und 8, dadurch gekennzeichnet, daß die erste Faser (26ₐ) und die dritte Faser (26_{c}) seitlich bearbeitet sind (72ₐ, 72_{c}), um ihren Anschluß in einer winkelhalbierenden Ebene ihrer jeweiligen Achsen zu gestatten.
